(19) Europäisches Patentamt
European Patent Office
Office européen des brevets

(11) **EP 1 815 990 A1**

(12) **EUROPEAN PATENT APPLICATION**

(43) Date of publication:
**08.08.2007 Bulletin 2007/32**

(51) Int Cl.:
**B41J 2/14** (2006.01)

(21) Application number: **06251952.5**

(22) Date of filing: **06.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **21.01.2006 KR 20060006583**

(71) Applicant: **Samsung Electronics Co., Ltd.**
**Suwon-si, Gyeonggi-Do (KR)**

(72) Inventors:
• **Lee, Hwa-sun,**
**c/o 946-110 Lotte Apt.**
**Suwon-si,**
**Gyeonggi-do (KR)**
• **Lee, Tae-kyung,**
**Suwon-si,**
**Gyeonggi-do (KR)**

• **Lee, Kyo-yeol,**
**c/o 156-1302 Kumho Apt.**
**Yongin-si,**
**Gyeonggi-do (KR)**
• **Moon, Chang-youl,**
**c/o 323-504 Samik Apt.**
**Suwon-si,**
**Gyeonggi-do (KR)**
• **Chung, Jae-woo,**
**c/o 114-902 Byucksan Apt.**
**Suwon-si,**
**Gyeonggi-do (KR)**

(74) Representative: **Greene, Simon Kenneth**
**Elkington and Fife LLP,**
**Prospect House,**
**8 Pembroke Road**
**Sevenoaks,**
**Kent TN13 1XR (GB)**

(54) **Inkjet printhead having piezoelectric actuator and method of driving the piezoelectric actuator**

(57) Provided are an inkjet printhead and a method of driving the inkjet printhead. The inkjet printhead includes a flow channel substrate having a pressure chamber, and a piezoelectric actuator formed on the flow channel substrate to apply a driving force to the pressure chamber for ejecting ink. The piezoelectric actuator includes a piezoelectric layer formed on the flow channel substrate in correspondence with the pressure chamber, and a plurality of common electrodes and a plurality of driving electrodes alternately arranged in a length direction of the piezoelectric layer.

FIG. 3

Printed by Jouve, 75001 PARIS (FR)

## Description

The present invention relates to an inkjet printhead that ejects ink using a piezoelectric actuator, and a method of driving the piezoelectric actuator.

Generally, inkjet printheads are devices for printing an image on a printing medium by firing droplets of ink onto a desired region of the printing medium. Depending on the ink ejecting method, the inkjet printheads can be classified into two types. One is a thermal inkjet printhead, in which ink is heated to form ink bubbles and the expansive force of the bubbles causes ink droplets to be ejected. The other is a piezoelectric inkjet printhead, in which a piezoelectric crystal is deformed and the pressure due to the deformation of the piezoelectric crystal causes ink droplets to be ejected.

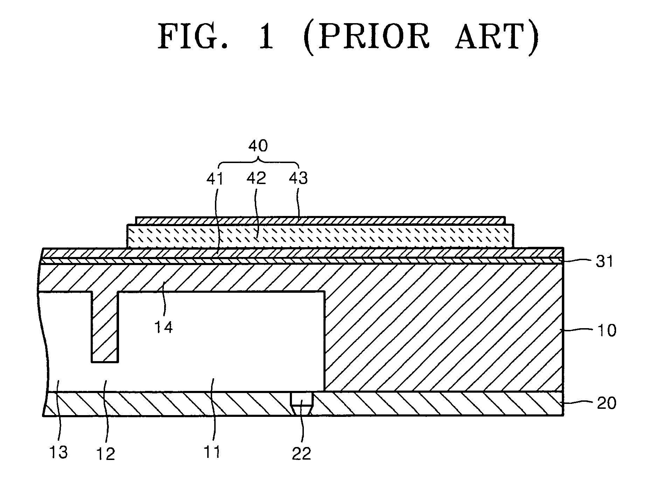

FIG. 1 is a vertical section showing a general structure of a conventional piezoelectric inkjet printhead. Referring to FIG. 1, a manifold 13, a plurality of restrictors 12, and a plurality of pressure chambers 11 are included in a flow channel substrate 10 to form an ink flow channel. A plurality of nozzles 22 corresponding to the pressure chambers 11 is formed in a nozzle substrate 20. A piezoelectric actuator 40 is formed on the flow channel substrate 10. The manifold 13 is a passage allowing inflow of ink from an ink reservoir (not shown) to the pressure chambers 11, and the restrictors 12 is a passage allowing inflow of the ink from the manifold 13 to the pressure chambers 11. The pressure chambers 11 are arranged along one side or both sides of the manifold 13 to store ink to be ejected through the nozzles 22. The volume of the pressure chamber 11 varies according to the operation of the piezoelectric actuator 40. Thus, ink flows into or out of the pressure chamber 11 according to the pressure variation. For this, a portion of the flow channel substrate 10 forming an upper wall of the press chamber 11 is used as a vibrating plate 14. The vibrating plate 14 is deformed by the operation of the piezoelectric actuator 40.

The piezoelectric actuator 40 includes a lower electrode 41, a piezoelectric layer 42, and an upper electrode 43 that are sequentially stacked on the flow channel substrate 10. A silicon oxide layer 31 is formed between the lower electrode 41 and the flow channel substrate 10 as an insulating layer. The lower electrode 41 is formed on the entire surface of the silicon oxide layer 31 as a common electrode. The piezoelectric layer 42 is formed on the lower electrode 41 above the pressure chamber 11. The upper electrode 43 is formed on the piezoelectric layer 42 as a driving electrode for applying a voltage to the piezoelectric layer 42. A flexible printed circuit (FPC) 50 is connected to the upper electrode 43 for applying a voltage to the upper electrode 43.

When a driving pulse is applied to the upper electrode 43, the piezoelectric layer 42 is deformed, thereby bending the vibrating plate 14 and thus changing the volume of the pressure chamber 11. By this, ink contained in the pressure chamber 11 is ejected through the nozzle 22. The deformation of the vibrating plate 14 should be large to effectively eject ink having various viscosities. The deformation of the vibrating plate 14 depends on the deformation amount of the piezoelectric layer 42 in a transverse direction. The transverse deformation of the piezoelectric layer 42 depends on the transverse length of the piezoelectric layer 42 and the magnitude of the driving voltage applied to the piezoelectric layer 42. However, the transverse length of the piezoelectric layer 42 is restricted by the length of the pressure chamber 11. Therefore, in the piezoelectric actuator 40 shown in FIG. 1, the driving voltage to the piezoelectric layer 42 should be large to increase the deformation of the vibrating plate 14. Further, the transverse deformation of the piezoelectric layer 42 depends on the thickness uniformity of the piezoelectric layer 42. That is, if the thickness of the piezoelectric layer 42 is not uniform, the transverse deformation of the piezoelectric layer 42 is affected by the thickness variation.

According to an aspect of the present invention, there is provided an inkjet printhead including: a flow channel substrate having a pressure chamber; and a piezoelectric actuator formed on the flow channel substrate to apply a driving force to the pressure chamber for ejecting ink, the piezoelectric actuator having a piezoelectric layer formed on the flow channel substrate in correspondence with the pressure chamber, and a plurality of common electrodes and a plurality of driving electrodes alternately arranged in a length direction of the piezoelectric layer.

An insulating layer may be formed between the flow channel substrate and the piezoelectric actuator.

The common electrodes and the driving electrodes may be formed on the piezoelectric layer.

According to another aspect of the present invention, there is provided a method of driving a piezoelectric actuator of an inkjet printhead including a flow channel substrate having a pressure chamber, wherein the piezoelectric actuator is formed on the flow channel substrate to apply a driving force to the pressure chamber for ejecting ink, the method including: dividing a piezoelectric layer of the piezoelectric actuator into a plurality of sections in a length direction of the piezoelectric layer; and applying a driving electric field to each of the sections in the length direction.

The present invention thus provides a piezoelectric inkjet printhead that operates using a low driving voltage and is less affected by the thickness uniformity of a piezoelectric layer, and a method of driving the piezoelectric inkjet printhead.

The above and other features and advantages of the present invention will become more apparent by describing in detail exemplary embodiments thereof with reference to the attached drawings in which:

FIG. 1 is a vertical section showing a general structure of a conventional piezoelectric inkjet printhead;

FIG. 2 is a plan view showing a structure of an inkjet printhead according to an embodiment of the present invention;
FIG. 3 is a vertical section of the inkjet printhead depicted in FIG. 2;
FIG. 4 is a vertical section showing an operation of the inkjet printhead depicted in FIG. 2; and
FIGS. 5A and 5B show an ink ejecting operation of the inkjet printhead depicted in FIG. 2.

In the drawings, like reference numerals denote like elements, and the thicknesses of layers and regions are exaggerated for clarity. It will also be understood that when a layer is referred to as being "on" another layer or substrate, it can be directly on the other layer or substrate, or intervening layers may also be present. The present invention will now be described more fully with reference to the accompanying drawings, in which exemplary embodiments of the invention are shown.

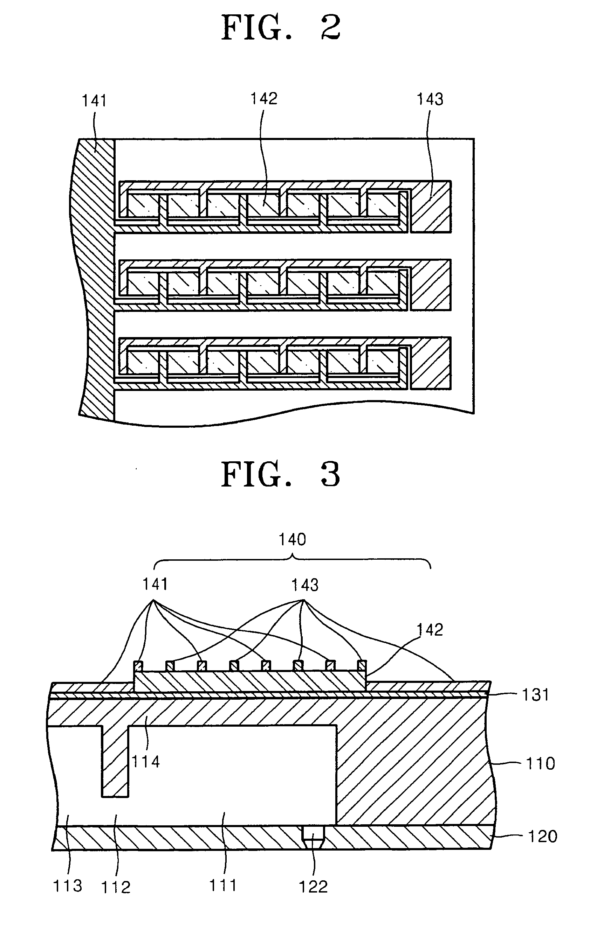

FIG. 2 is a plan view of a piezoelectric inkjet printhead according to an embodiment of the present invention, and FIG. 3 is a vertical section showing a structure of the piezoelectric inkjet printhead depicted in FIG. 2 along a length direction of a piezoelectric layer.

Referring to FIGS. 2 and 3, the piezoelectric inkjet printhead includes a flow channel substrate 110 in which an ink flow channel is formed, and a piezoelectric actuator 140 providing an ink ejecting pressure. The flow channel substrate 110 includes a pressure chamber 111, a manifold 113 supplying ink to the pressure chamber 111, and a restrictor 112. A nozzle substrate 120 is bonded to a bottom surface of the flow channel substrate 110 and includes a nozzle 122 ejecting the ink contained in the pressure chamber 111. A vibrating plate 114 is formed on a top area of the pressure chamber 111 and is deformed by the operation of the piezoelectric actuator 140. An ink flow channel is defined by the flow channel substrate 110 and the nozzle substrate 120.

The piezoelectric actuator 140 is formed on the flow channel substrate 110 to apply a driving force to the pressure chamber 111 for ejecting ink. The piezoelectric actuator 140 includes common electrodes 141, a piezoelectric layer 142 deformable in response to an applied voltage, and driving electrodes 143 receiving a driving voltage. The common electrodes 141, the piezoelectric layer 142, and the driving electrodes 143 are stacked on the flow channel substrate 110.

If the flow channel substrate 110 is formed of a silicon wafer, an insulating layer 131 may be formed between the piezoelectric actuator 140 and the flow channel substrate 110. For example, the insulating layer 131 may be a silicon oxide layer formed on the flow channel substrate 110 by plasma enhanced chemical vapor deposition (PECVD).

The piezoelectric layer 142 is formed by screen-printing a piezoelectric material paste onto the insulating layer 131 to a predetermined thickness. The piezoelectric layer 142 is formed on a region corresponding to the pressure chamber 111. Although various piezoelectric materials can be used for the piezoelectric layer 142, PZT (lead zirconate titanate) ceramic may be used for the piezoelectric layer 142.

In the piezoelectric inkjet printhead of the present invention, the piezoelectric layer 142 is divided into a plurality of sections in a length direction thereof, and a driving electric field is applied to each sections, respectively. For this, referring to FIG. 2, the common electrodes 141 and the driving electrodes 143 are alternately arranged along the length direction of the piezoelectric layer 142.

The common electrodes 141 and the driving electrodes 143 are formed of conductive metals. The common electrodes 141 and the driving electrodes 143 may be formed by one metal layer or two metal layers such as a titanium (Ti) layer and a platinum (Pt) layer. The common electrodes 141 and the driving electrodes 143 may be formed by respectively depositing Ti and Pt onto the insulating layer 131 and the piezoelectric layer 142 using a sputtering process. Alternatively, the common electrodes 141 and the driving electrodes 143 may be formed by screen-printing a conductive metal such as Ag-Pd paste onto the piezoelectric layer 142. In this case, the piezoelectric layer 142, the common electrodes 141, and the driving electrodes 143 are sintered at a predetermined temperature, for example, 900 to 1,000 °C. After that, a polling process is performed on the piezoelectric layer 142 by applying an electric field to the piezoelectric layer 142 to activate the piezoelectric characteristic of the piezoelectric layer 142. The common electrodes 141 and the driving electrodes 143 may be formed between the piezoelectric layer 142 and the insulating layer 131.

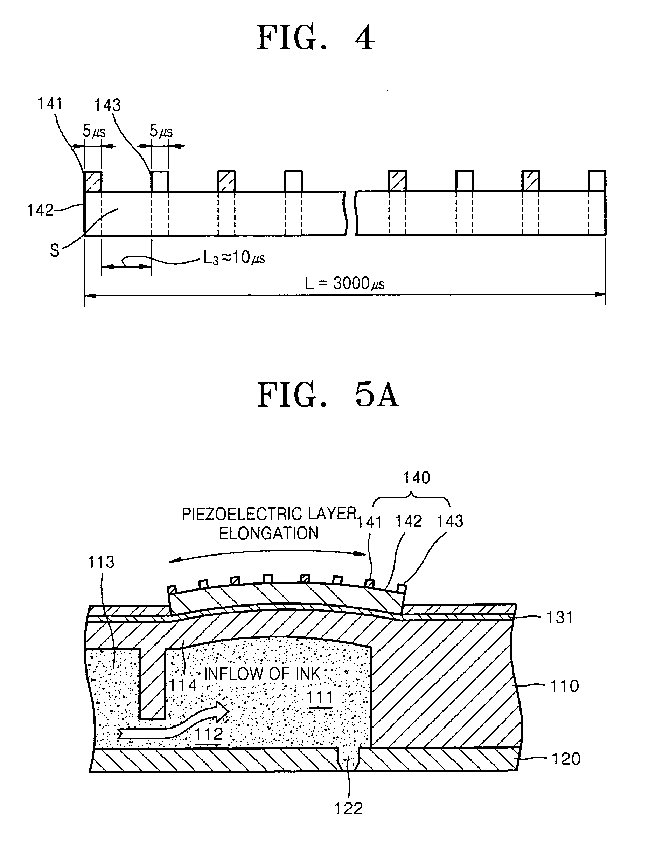

An example of how to calculate the deformation amount of the piezoelectric layer 142 when the piezoelectric actuator 140 operates will now be described with reference to FIG. 4. Referring to FIG. 4, one hundred common electrodes 141 and one hundred driving electrodes 143 are arranged in the length direction of the piezoelectric layer 142. In this case, the piezoelectric layer 142 is divided into one hundred and ninety nine sections (S). When the length of the piezoelectric inkjet printhead layer 142 is 3000 $\mu$m, and the widths of the common electrodes 141 and the driving electrodes 143 are respectively 5 $\mu$m, the length of each section (S) is approximately 10.05 $\mu$m (hereinafter, assumed to be 10 $\mu$m). Therefore, a total effective length of the piezoelectric layer 142 is 1990 $\mu$m (199 x 10 $\mu$m). When an electric field is formed at the respective sections (S) by a driving voltage applied to the driving electrodes 143, the piezoelectric layer 142 is elongated in the same direction as the polarization direction of the piezoelectric layer 142. A length variation rate ($L_r$) of the piezoelectric layer 142 in the polarization direction can be expressed by the following equation:

$$Lr = d_{33} \times E_3$$

$$= d_{33} \times V_3 / L_3$$

where $d_{33}$ denotes a longitudinal piezoelectric coefficient in a length direction (the same as the polarization direction), $E_3$ denotes the strength of an electric field, $V_3$ denotes a voltage applied to the driving electrodes 143, and $L_3$ denotes the length of the section (S).

The longitudinal piezoelectric coefficient $d_{33}$ is two times higher than a transversal piezoelectric coefficient $d_{31}$ in a transverse direction (perpendicular to the polarization direction). Therefore, the length variation rate (Lr) of the piezoelectric layer 142 in the polarization direction can be expressed by the following equation:

$$Lr = -2 \times d_{31} \times V_3 / L_3$$

For example, when $d_{31} = -100 \times 10^{-12}$ m/V (the negative sign (-) means a decrease in the length of the piezoelectric layer 142), $V_3 = 65$ V, and $L_3 = 10$ μm, the length variation rate (Lr) is 1300 μm/m. By multiplying the length variation rate (Lr) of 1300 μm/m by 1990 μm (the total effective length of the piezoelectric layer 142), a total length variation value of the piezoelectric layer 142 is 2.587 μm = 2587 nm. Consequently, when the piezoelectric layer 142 having a length of 3000 μm is divided into one hundred and ninety nine 10-μm sections (S) by the common electrodes 141 having a width of 5 μm and the driving electrodes 143 having a width of 5 μm, the total length variation value of the piezoelectric layer 142 is 2587 nm.

The length variation value of the piezoelectric layer 42 of the conventional piezoelectric actuator 40 shown in FIG. 1 will now be calculated. The piezoelectric layer 42 is polarized in its thickness direction, and elongated in the thickness direction when a driving voltage is applied to the upper electrode 43. Therefore, the piezoelectric layer 42 shrinks in a direction perpendicular to its thickness direction. When the thickness (T) of the piezoelectric layer 42 is 25 μm, the length (L) of the piezoelectric layer 42 is 3000 μm, and a voltage of 65 V is applied to the upper electrode 43,

The length variation value of the piezoelectric layer 42 = $d_{31} \times E_3 \times L$

$$= (d_{31} \times V_3 / T) \times L$$

$$= (-100 \times 10^{-12} \times 65 / 25 \times 10^{-6}) \times 3000 = -780 \text{ nm.}$$

That is, the length of the piezoelectric layer 42 decreases by 780 nm.

When the two results are compared, the deformation amount of the piezoelectric actuator 140 of the present invention is approximately 3.3 times higher than that of the conventional piezoelectric actuator 40. Although other parameters such as the thickness and length of the piezoelectric layer 142 and the magnitude of the driving voltage are not changed, the deformation amount of the piezoelectric actuator 140 can be largely increased compared with the conventional piezoelectric actuator 40 by dividing the piezoelectric layer 142 into the plurality of sections (S) and applying a driving voltage to the respective sections (S). This fact can be easily checked by simple calculations.

In FIG. 4, if the numbers of the common electrodes 141 and the driving electrodes 143 are n/2, respectively, the total length of the piezoelectric layer 142 is L, and the length of the respective sections (S) is $L_3$, the total effective length of the piezoelectric layer 142 is $(n - 1) \times L_3$. Therefore, the length variation value of the piezoelectric layer 142 is as follows:

$$(-2 \times d_{31} \times E_3) \times (n - 1) \times L_3$$

$$= (-2 \times d_{31} \times V_3 / L_3) \times (n - 1) \times L_3$$

$$= -2 \times d_{31} \times V_3 \times (n - 1)$$

That is, the length variation value of the piezoelectric layer 142 increases as the number of sections (S) increases (i.e., as the widths of the common electrodes 141 and the driving electrodes 143, and the length $L_3$ of the respective

sections (S) become smaller). Therefore, according to the present invention, the piezoelectric actuator 140 of the piezoelectric inkjet printhead can be deformed much more than the conventional piezoelectric actuator when the size of the piezoelectric layer 142 and the driving voltage $V_3$ are the same as those of the conventional piezoelectric actuator. In calculating the deformation amount of the piezoelectric layer 42 of the conventional piezoelectric actuator 40, the piezoelectric coefficient $d_{31}$ is a transverse piezoelectric coefficient defined in a direction perpendicular to the polarization direction (the thickness direction of the piezoelectric layer 42). Therefore, the piezoelectric actuator 40 can be stably driven only when the thickness of the piezoelectric layer 42 is uniform. However, according to the present invention, in calculating the deformation amount of the piezoelectric layer 142 of the piezoelectric actuator 140, the piezoelectric coefficient $d_{33}$ is a longitudinal piezoelectric coefficient defined in the same direction as the polarization direction (the length direction of the piezoelectric layer 142). Therefore, the deformation amount of the piezoelectric layer 142 is not largely affected by the thickness uniformity of the piezoelectric layer 142. That is, the piezoelectric actuator 140 can be uniformly deformed if the common electrodes 141 and the driving electrodes 143 are uniformly formed. As a result, the inkjet printhead of the present invention can print images with uniform quality.

Further, since the piezoelectric actuator 140 can be deformed to a desired degree with a much lower driving voltage by dividing the piezoelectric layer 142 into a plurality of sections, a low-voltage piezoelectric inkjet printhead can be provided.

Furthermore, in the conventional inkjet printhead having the lower and upper electrodes 41 and 43 on top and bottom surfaces of the piezoelectric layer 42, the silicon oxide layer 31 is formed on the flow channel substrate 10, and the lower electrode 41 is formed on the silicon oxide layer 31. Next, the piezoelectric layer 42 is formed on the lower electrode 41. Then, the upper electrode 43 is formed on the piezoelectric layer 42. However, in the inkjet printhead of the present invention, a silicon oxide layer is formed on the flow channel substrate 110 as the insulating layer 131, and the piezoelectric layer 142 is formed on the insulating layer 131. Then, the common electrodes 141 and the driving electrodes 143 are simultaneously formed on the piezoelectric layer 142 and the insulating layer 131. Therefore, the electrodes 141 and 143 can be formed through a simple process with less cost when compared with the conventional inkjet printhead.

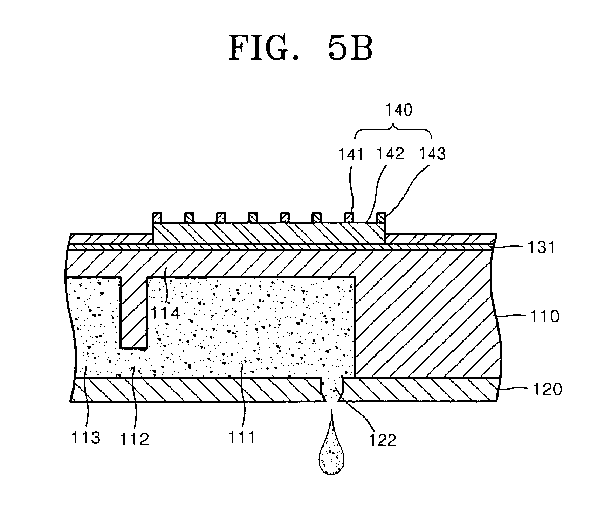

Referring to FIG. 5A, in the inkjet printhead of the present invention, when a driving voltage is applied to the driving electrodes 143, the piezoelectric layer 142 is elongated, thereby bending the vibrating plate 114 upward and therefore increasing the volume of the pressure chamber 111. By this, ink flows from an ink reservoir (not shown) into the pressure chamber 111 through the manifold 113 and the restrictor 112. Referring to FIG. 5B, when the driving voltage is removed from the driving electrodes 143, the piezoelectric layer 142 and the vibrating plate 114 return to their original shapes, and thus the volume of the pressure chamber 111 is reduced. By a pressure wave caused by the reduction of the volume of the pressure chamber 111, the ink contained in the pressure chamber 111 is ejected through the nozzle 122. Ink can be successively ejected through the nozzle 122 by applying a driving pulse voltage to the driving electrodes 143.

According to the present invention, the piezoelectric inkjet printhead and the method of driving the piezoelectric inkjet printhead are characterized in that the piezoelectric layer 142 of the piezoelectric actuator 140 is divided into a plurality of sections (S) along the length of the piezoelectric layer 142 and a driving electric field is applied to each of the sections (S) using the electrodes 141 and 143. The flow channel substrate 110 and the nozzle substrate 120 shown in FIGS. 2 and 3 are exemplary. That is, various other ink flow channels can be formed in the piezoelectric inkjet printhead of the present invention. Further, the ink flow channel can be formed using a number of substrates instead of using two substrates 110 and 120 shown in FIG. 3.

As described above, according to the present invention, the piezoelectric inkjet printhead and the method of driving the piezoelectric inkjet printhead have the following advantages.

First, since the piezoelectric layer is divided into a plurality of sections and a driving electric field is applied to each of the sections, the deformation amount of the piezoelectric layer of the piezoelectric actuator can be largely increased using the same piezoelectric layer and driving voltage when compared with the conventional piezoelectric actuator.

Secondly, the same deformation amount of the piezoelectric actuator can be obtained using a much lower driving voltage by dividing the piezoelectric layer into a plurality of sections. Therefore, a low-voltage piezoelectric inkjet printhead can be provided.

Thirdly, since the deformation amount of the piezoelectric layer is calculated using the longitudinal piezoelectric coefficient $d_{33}$ in the piezoelectric actuator of the inkjet printhead of the present invention, the deformation amount of deformation of the piezoelectric layer is less affected by the thickness of the piezoelectric layer.

Fourthly, the common electrodes and the driving electrodes can be simultaneously formed on the piezoelectric layer, so that the process of forming the electrodes can be simplified, and thus manufacturing cost can be reduced.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1.  An inkjet printhead comprising:

    a flow channel substrate including a pressure chamber; and
    a piezoelectric actuator formed on the flow channel substrate and arranged to apply a driving force to the pressure chamber for ejecting ink, the piezoelectric actuator including a piezoelectric layer formed on the flow channel substrate in correspondence with the pressure chamber, and a plurality of common electrodes and a plurality of driving electrodes alternately arranged in a length direction of the piezoelectric layer.

2.  The inkjet printhead of claim 1, wherein an insulating layer is formed between the flow channel substrate and the piezoelectric actuator.

3.  The inkjet printhead of claim 1 or 2, wherein the common electrodes and the driving electrodes are formed on the piezoelectric layer.

4.  A method of driving a piezoelectric actuator of an inkjet printhead including a flow channel substrate having a pressure chamber, wherein the piezoelectric actuator is formed on the flow channel substrate and arranged to apply a driving force to the pressure chamber for ejecting ink, the method comprising:

    dividing a piezoelectric layer of the piezoelectric actuator into a plurality of sections in a length direction of the piezoelectric layer; and
    applying a driving electric field to each of the sections in the length direction.

# FIG. 1 (PRIOR ART)

# FIG. 2

141       142       143

# FIG. 3

140

141       143

142

131

114

110

120

113   112      111      122

# FIG. 4

# FIG. 5A

# FIG. 5B

**European Patent Office**

## EUROPEAN SEARCH REPORT

Application Number

EP 06 25 1952

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 520 374 A (KOTO HARUHIKO [JP]) 28 May 1985 (1985-05-28) * column 4, line 27 - line 54 * * figures 4a-4d * | 1-4 | INV. B41J2/14 |
| A | US 2004/046838 A1 (JUNHUA CHANG [JP]) 11 March 2004 (2004-03-11) * paragraphs [0065] - [0070] * * figures * | 1,4 | |
| A | US 2005/270340 A1 (MITA TSUYOSHI [JP]) 8 December 2005 (2005-12-08) * the whole document * | 1,4 | |

TECHNICAL FIELDS SEARCHED (IPC)

B41J

The present search report has been drawn up for all claims

| Place of search | Date of completion of the search | Examiner |
|---|---|---|
| The Hague | 25 June 2007 | Didenot, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 06 25 1952

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2007

| Patent document cited in search report | | Publication date | Patent family member(s) | | Publication date |
|---|---|---|---|---|---|
| US 4520374 | A | 28-05-1985 | NONE | | |
| US 2004046838 | A1 | 11-03-2004 | JP<br>JP | 3879685 B2<br>2004096068 A | 14-02-2007<br>25-03-2004 |
| US 2005270340 | A1 | 08-12-2005 | NONE | | |

For more details about this annex : see Official Journal of the European Patent Office, No. 12/82